# EUROPEAN PATENT APPLICATION

(11) **EP 4 434 945 A1**
(43) Date of publication of application: **25.09.2024**
(21) Application number: 22895252.9
(22) Date of filing: 30.09.2022
(51) Int. Cl.: C03B 8/00, C03B 19/02

(54) **GLASS PRODUCTION METHOD**

(30) Priority: 19.11.2021 JP 2021188746
(71) Applicant: Nippon Electric Glass Co., Ltd., Otsu-shi, Shiga 520-8639 (JP)
(72) Inventor: NAKATSUKA, Kazuto, Otsu-shi, Shiga 520-8639 (JP); KAGAI, Tsubasa, Otsu-shi, Shiga 520-8639 (JP)
(74) Representative: Tetzner, Michael
(86) International application number: PCT/JP2022/036647
(87) International publication number: WO 2023/089966

(57) **Abstract**

Provided is a glass production method that can suppress devitrification of glass and increase the productivity of the glass. A glass production method according to the present invention includes the steps of: pouring a melt 11 obtained by melting a raw material of a glass 18 into a mold 13; and cooling the melt 11 to obtain the glass 18, wherein the mold 13 has a bottom surface 14a and a side surface 15a and, in the step of cooling the melt 11, the mold 13 is cooled from a direction of the bottom surface 14a.

## Description

### [Technical Field]

The present invention relates to glass production methods.

### [Background Art]

Recently, chalcogenide glass has been known as a material for preferred use in the field of infrared optics. Chalcogenide glass not only has infrared transparency, but also is excellent in terms of mass productivity and cost reduction because it can be press-molded into shapes.

In producing an optical element, such as a lens, for example, a molten glass is cast with rapid cooling to make a glass ingot and the glass ingot is ground, polished, and washed to make a preform glass. Subsequently, the preform glass is subjected to press molding or the like, thus producing an optical element, such as a lens.

Patent Literature 1 below discloses an example of a method for producing a glass article. In this production method, a molten glass is cast-molded by pouring it into a bottomed, cylindrical mold, thus obtaining a glass ingot. In the production method described in Patent Literature 1, after the molten glass is poured into the mold, the glass is subjected to an annealing process in a reduced-pressure environment. After the annealing process, the glass is gradually cooled to ordinary temperature.

### [Citation List]

### [Patent Literature]

[PTL 1]
JP-A-2015-209364

### [Summary of Invention]

### [Technical Problem]

However, in the method described in Patent Literature 1, depending on the type of glass, the glass may be devitrified due to precipitation of crystals or other causes. Furthermore, the method needs the process of putting the environment for molding under an inert atmosphere or like process, which may make it difficult to increase the productivity.

An object of the present invention is to provide a glass production method that can suppress devitrification of glass and increase the productivity of the glass.

### [Solution to Problem]

A description will be given below of aspects of a glass production method that can solve the above problems.

A glass production method according to Aspect 1 has a feature of including the steps of: pouring a melt obtained by melting a raw material of a glass into a mold; and cooling the melt to obtain the glass, wherein the mold has a bottom surface and a side surface and, in the step of cooling the melt, the mold is cooled from a direction of the bottom surface.

A glass production method according to Aspect 2 is the glass production method according to Aspect 1, wherein, preferably, the method further includes the step of preheating the mold prior to the step of pouring the melt into the mold, and in the step of preheating the mold, T_{L}-120°C ≤ T_{M} ≤ T_{L}-20°C holds where T_{M}°C represents a temperature of the mold in the step of preheating the mold and T_{L}°C represents a temperature of the melt in the step of pouring the melt into the mold.

A glass production method according to Aspect 3 is the glass production method according to Aspect 1 or 2, wherein, preferably, in the step of cooling the melt, only the bottom surface of the mold is cooled.

A glass production method according to Aspect 4 is the glass production method according to any one of Aspects 1 to 3, wherein where H represents a height of the mold and A represents a maximum of dimensions of the mold along a direction orthogonal to the height of the mold, H/A is preferably not less than 1/50 and not more than 1/2.

A glass production method according to Aspect 5 is the glass production method according to any one of Aspects 1 to 4, wherein the glass is preferably a chalcogenide glass.

### [Advantageous Effects of Invention]

The present invention enables a provision of a glass production method that can suppress devitrification of glass and increase the productivity of the glass.

### [Brief Description of Drawings]

[Fig. 1]

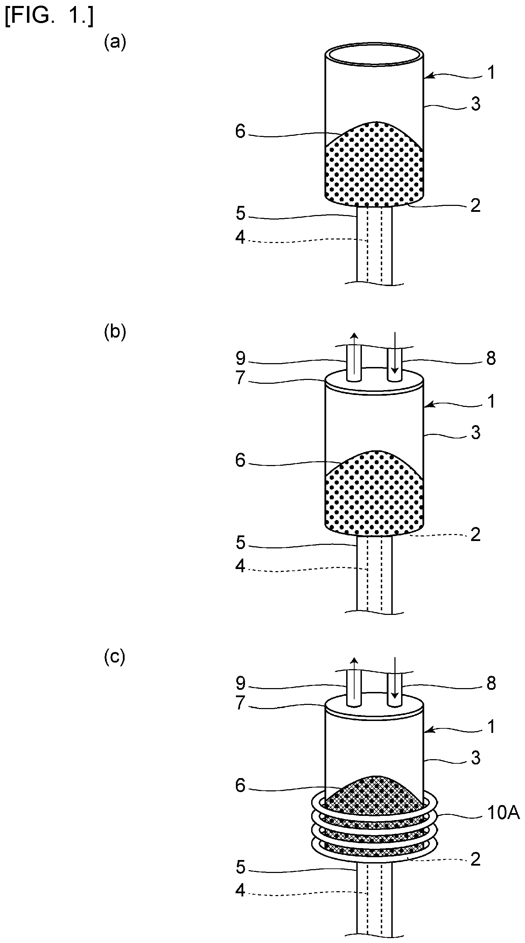

   Figs. 1(a) to 1(c) are schematic cross-sectional views for illustrating a glass production method according to a first embodiment of the present invention until the step of heating a raw material.
[Fig. 2]

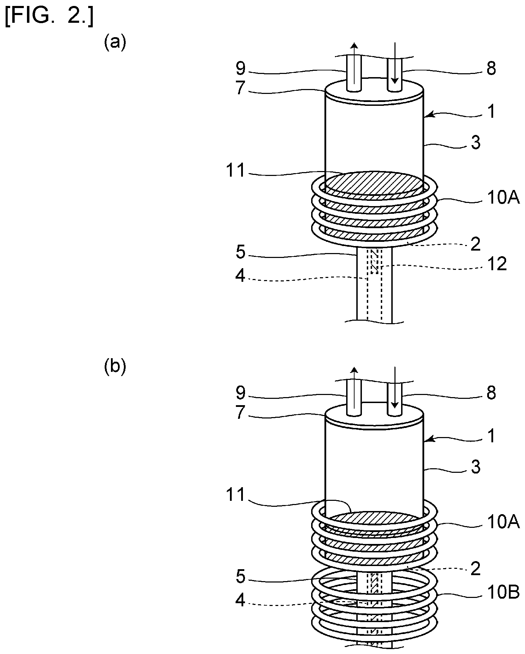

   Figs. 2(a) and 2(b) are schematic cross-sectional views for illustrating the step of stirring a melt and a subsequent step in the glass production method according to the first embodiment of the present invention.
[Fig. 3]

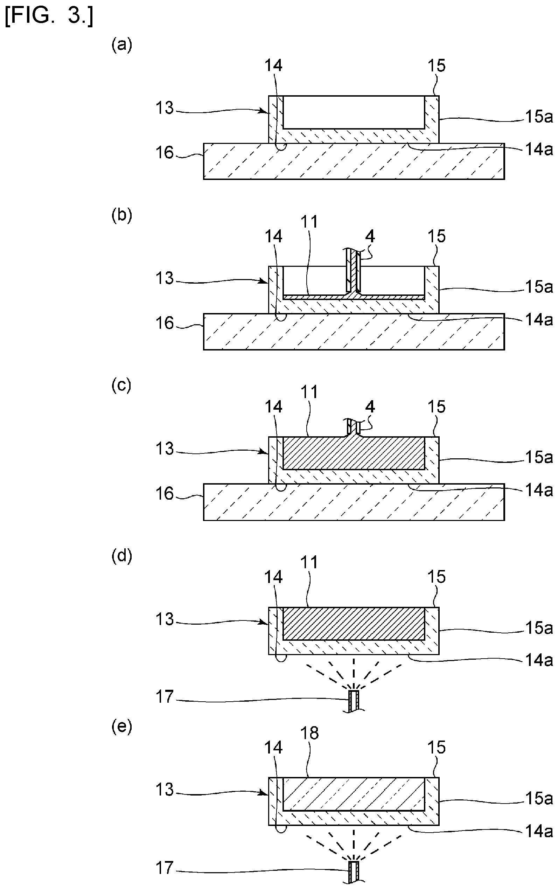

   Figs. 3(a) to 3(e) are schematic cross-sectional views for illustrating the step of pouring the melt into a mold and the step of cooling the melt in the glass production method according to the first embodiment of the present invention.
[Fig. 4]

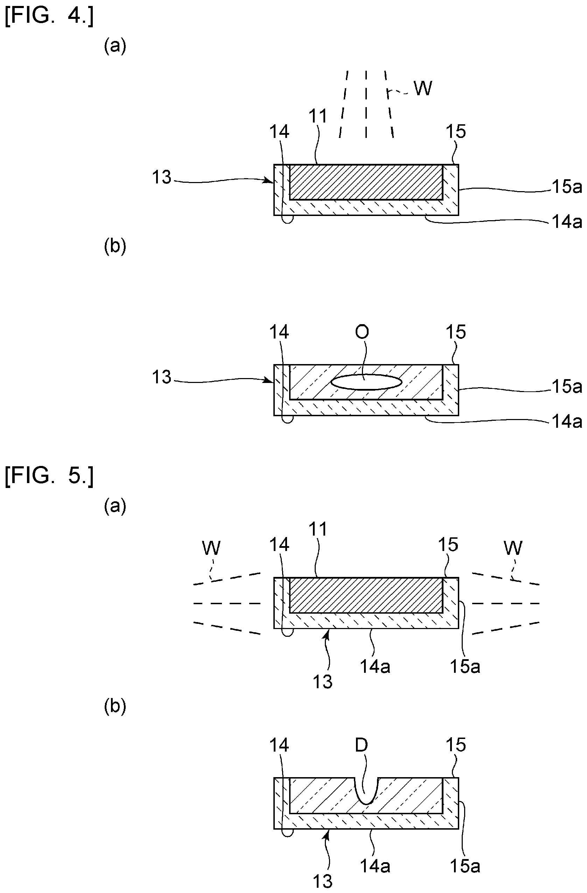

   Fig. 4(a) is a schematic cross-sectional view for illustrating the step of cooling a melt in Comparative Example 1 and Fig. 4 (b) is a schematic cross-sectional view showing a glass obtained in Comparative Example 1.
[Fig. 5]
   Fig. 5(a) is a schematic cross-sectional view for illustrating the step of cooling a melt in Comparative Example 2 and Fig. 5 (b) is a schematic cross-sectional view showing a glass obtained in Comparative Example 2.

### [Description of Embodiments]

Hereinafter, a description will be given of a preferred embodiment. However, the following embodiment is merely illustrative and the present invention is not limited to the following embodiment. Throughout the drawings, members having substantially the same functions may be referred to by the same reference characters.

### (Glass Production Method)

### (First Embodiment)

This embodiment is characterized by the step of molding a glass into a shape after pouring a melt obtained by melting a raw material into a mold. A production method according to this embodiment will be described below with reference to the drawings.

Figs. 1(a) to 1(c) are schematic cross-sectional views for illustrating a glass production method according to a first embodiment of the present invention until the step of heating a raw material. Figs. 2(a) and 2(b) are schematic cross-sectional views for illustrating the step of stirring a melt and a subsequent step in the glass production method according to the first embodiment of the present invention. Figs. 3(a) to 3(e) are schematic cross-sectional views for illustrating the step of pouring the melt into a mold and the step of cooling the melt in the glass production method according to the first embodiment of the present invention. For convenience's sake, a coil 10A or a coil 10B are omitted in some of the drawings.

The production method according to this embodiment is a method for producing a chalcogenide glass as an example of the present invention. However, the method according to the present invention is also applicable to the production of various types of glasses other than chalcogenide glass.

As shown in Fig. 1(a), in this embodiment, a crucible is used as a container 1. The container 1 has a bottom portion 2 and a sidewall portion 3. The container 1 is preferably made of quartz glass. Thus, a glass can be suitably formed according to the following steps.

A tubing 4 is connected to the bottom portion 2 of the container 1. A mantle tube 5 is disposed to surround the tubing 4. The tubing 4 passes through the mantle tube 5. In this embodiment, the mantle tube 5 is made of Pt. However, the mantle tube 5 is sufficient to be made of an appropriate metal.

As shown in Fig. 1(a), a raw material 6 is placed into the container 1. In this embodiment, the raw material 6 is a mixture containing components constituting a chalcogenide glass. In this embodiment, the raw material 6 is sufficient to contain a metal. As used in the present invention, "metal" includes a metallic element, a semimetallic element, an alkali metal element, and an alkaline earth metal element. The details of the raw material 6 will be described hereinafter. For the raw material 6, it is preferred to previously melt a small amount of raw material 6 to a small amount of melt 11 and allow the small amount of melt 11 to flow out into the tubing 4. The small amount of melt 11 is cooled in the tubing 4 to turn into a solid (a solid glass) . Thus, a plug 12 can be formed. And thus, even when the tubing 4 remains connected to the bottom portion 2 of the container 1, the raw material 6 can be stably placed into the container 1.

Next, as shown in Fig. 1(b), a lid 7 is placed on the top of the sidewall portion 3 of the container 1. The lid 7 includes a gas supply tube 8 and a gas exhaust tube 8 both connected thereto. The gas in the container 1 is evacuated through the gas exhaust tube 9 and, thus, the pressure in the container 1 is decreased. Next, an inert gas or a reducing gas is supplied through the gas supply tube 8 into the container 1. By repeating this process, the interior of the container 1 is placed under an inert atmosphere or a reductive atmosphere.

In forming a chalcogenide glass, the heated raw material 6 needs to be prevented from reacting with oxygen or moisture. In this embodiment, since the air in the container 1 is replaced by an inert gas or a reducing gas, oxygen and moisture are removed from the interior of the container 1. Thus, without the need to use a closed container maintained in a vacuum state, a chalcogenide glass can be suitably formed. In this embodiment, as will be described hereinafter, the formed glass can be allowed to flow out of the container 1 through the tubing 4. Therefore, there is no need to break the container 1 for the purpose of taking out the formed glass, which enables the container 1 to be reused.

Meanwhile, as shown in Fig. 1(c), a coil 10A is disposed to surround at least a portion of the sidewall portion 3 of the container 1. Specifically, the coil 10A is disposed to surround a portion of the container 1 inside of which the raw material 6 is to be placed. The raw material 6 is induction-heated by passing a current through the coil 10A. Specifically, an induced current is generated by an induction magnetic field created by passing a current through the coil 10A. The raw material 6 contains a metal and the metal has internal resistance. Therefore, an induced current passes through the metal and, thus, the metal contained in the raw material 6 serves as a heat source to heat the entire raw material 6. By this induction heating, the raw material 6 is turned into a melt 11 as shown in Fig. 2(a).

When an induction magnetic field and an induced current are generated by passing a current through the coil 10A, a Lorentz force is applied to the melt 11. The melt 11 can be stirred by the Lorentz force. As just described, in this embodiment, the melt 11 can be stirred without the use of any means for stirring the melt 11 by bringing a member into direct contact with the melt 11, such as a stirrer. However, a stirrer or like means may be used to stir the melt 11.

As described previously, part of the melt 11 flows out into the tubing 4. The melt 11 in the tubing 4 is cooled into a sold (a solid glass) . Thus, a plug 12 is formed. As a result, a small amount of melt 11 corresponding to the amount thereof for forming the plug 12 flows out into the tubing 4, but the rest of the melt 11 is prevented from flowing out by the plug 12. However, a lid or a plunger may be used instead of the plug 12.

As shown in Fig. 2(b), a coil 10B is disposed around the mantle tube 5. By passing a current through the coil 10B, the mantle tube 5 is induction-heated. By radiant heat from the mantle tube 5, the tubing 4 and the plug 12 in the tubing 4 are heated. Note that the plug 12 is a solid glass, not a single piece of metal or alloy, and is therefore not induction-heated. By the above heating, the plug 12 is melted and, thus, the melt 11 flows out of the container 1.

The method shown in Figs. 1(a) to 1(c) and the method shown in Figs. 2(a) and 2(b) are merely illustrative, and the method in the step of melting the raw material 6 and the method in the step of allowing the melt 11 to flow out are not limited to the above methods.

In this embodiment, a mold 13 shown in Fig. 3(a) is used in molding a glass into a shape. The mold 13 is a disc-shaped vessel. The mold 13 has a bottom portion 14 and a wall portion 15. The bottom portion 14 has a bottom surface 14a. The wall portion 15 has a side surface 15a. The bottom surface 14a and the side surface 15a are outside surfaces of the mold 13. The side of the mold 13 opposite to the bottom portion 14 is open.

First, as shown in Fig. 3(a), the mold 13 is put on a hot plate 16 to preheat the mold 13. However, the mold 13 may be preheated by any heating means other than the hot plate 16. Alternatively, the mold 13 may not necessarily be preheated.

Next, as shown in Fig. 3(b), the melt 11 discharged from the tubing 4 is poured into the mold 13. Next, as shown in Fig. 3(c), the melt 11 is poured into the mold 13 until the melt 11 in the mold 13 reaches a specified thickness (i.e., a specified liquid level). In this embodiment, in the step of pouring the melt 11 into the mold 13, the pouring is started in a state where the bottom portion 14 of the mold 13 is brought close to the tubing 4 and, then, the melt 11 is poured into the mold 13 while the mold 13 is moved away from the tubing 4. However, in pouring the melt 11 into the mold 13, the distance between the bottom portion 14 and the tubing 4 may be fixed.

Although in Fig. 3(c) the thickness of the melt 11 is schematically shown as a thickness reaching the top end of the wall portion 15, the above-described specified thickness of the melt 11 is not limited to this. In this embodiment, the step of pouring the melt 11 into the mold 13 and the after-mentioned step of cooling the melt 11 are performed in an air atmosphere. In this case, as the time for the melt 11 of chalcogenide glass to come into contact with the outside air increases, a heterogeneous layer is more likely to be formed on the surface of the melt 11. The heterogeneous layer is formed of oxidized impurities and/or devitrified matter and/or glass solidified by rapid cooling. When a heterogeneous layer is present on the surface of the melt 11, it serves as a protective layer and, therefore, a portion of the melt 11 present under the heterogeneous layer can be prevented from being oxidized.

Next, as shown in Fig. 3(d), the melt 11 is cooled in the mold 13. Thus, as shown in Fig. 3(e), a glass 18 is formed. More specifically, the mold 13 is cooled from the direction of the bottom surface 14a. In this embodiment, the mold 13 is cooled by water cooling the bottom surface 14a. The broken lines in Figs. 3(d) and 3(e) show water sprayed on the bottom surface 14a from a nozzle 17. By rapidly cooling the melt 11 in this manner, the glass 18 can be obtained. In Fig. 3(e), the glass 18 is schematically shown and volume contraction due to solidification of the melt 11 is not reflected.

When the glass 18 is ground, polished, and washed, a preform glass can be produced. Furthermore, when the preform glass is subjected to press molding or so on, an optical element, such as a lens, can be produced. Alternatively, without producing the preform glass, an optical element, such as a lens, may be produced directly from the glass 18. The heterogeneous layer can be removed by grinding, polishing or other methods.

This embodiment is characterized in that, in the step of cooling the melt 11, the mold 13 is cooled from the direction of the bottom surface 14a. Thus, devitrification of the glass 18 can be suppressed and, therefore, the productivity of the glass 18 can be increased. A detailed description regarding this will be given below by comparison between an example using the same method as in this embodiment and Comparative Examples 1 to 3.

Comparative Examples 1 to 3 are different from the example in the step of cooling the melt 11. More specifically, in the example, the bottom surface 14a of the mold 13 was water-cooled as described above. In Comparative Example 1, as shown in Fig. 4(a), the melt was air-cooled from the open side of the mold 13. In Comparative Example 2, as shown in Fig. 5(a), the melt was air-cooled from the side surface 15a side. In Comparative Example 3, the mold 13 and the melt 11 were allowed to stand still at room temperature.

In the example, a disc-shaped, non-devitrified glass could be obtained. Any shape defect was not found in the outside and inside of the glass of the example. Unlike this, in Comparative Example 1, a cavity O was formed in the inside of the glass as shown in Fig. 4(b). In Comparative Example 2, a large depression D was formed in the center of the glass as shown in Fig. 5(b). In Comparative Example 3, the glass was devitrified.

Hereinafter, the open side of the mold is described as the top thereof. In Comparative Example 1, the melt is cooled from the top side of the mold. Therefore, solidification of the melt starts at a portion thereof located on the top side. Meanwhile, the melt is cooled at room temperature also in the vicinity of the bottom of the mold. Then, the solidification of the melt gradually progresses from the bottom side toward the top side. When the melt is solidified, a volume contraction occurs. Therefore, when the solidification of the melt progresses at the portion thereof located on the bottom side, the liquid level of the melt remaining in an intermediate region of the mold gradually lowers toward the bottom side with the volume contraction. However, as described above, the portion of the melt located on the top side has already been solidified by cooling. Therefore, the liquid level of the melt separates from the solidified portion of the melt located on the top side. Thus, a cavity is formed in the inside of the glass.

In Comparative Example 2, the melt is cooled through the wall portion of the mold. Therefore, solidification of the melt progresses from a portion thereof on the wall portion side. With volume contraction due to the progress of solidification of the melt, the liquid level of the melt remaining in the center of the mold gradually lowers toward the bottom side. Thus, the center of the glass is largely depressed.

In Comparative Example 3, the melt is gradually cooled at room temperature and, therefore, the decrease in the temperature of the melt is relatively gentle. Thus, precipitation of crystals or the like occurs and the glass devitrifies.

Unlike the above comparative examples, since in the example the bottom surface of the mold is water-cooled, the melt is rapidly cooled, which enables the melt to be solidified before precipitation of crystals or the like progresses. Therefore, devitrification can be suppressed. Furthermore, solidification of the melt progresses from a portion thereof located in the vicinity of the bottom of the mold. Thus, the solidification of the melt progresses from the bottom side toward the top side. Therefore, depression of the glass or the like is less likely to be caused even by a volume contraction during the solidification of the melt. Furthermore, the solidification of the portion of the melt located on the top side progresses slowly. Therefore, unlike Comparative Example 1, separation between the solidified portion of the melt and the melt is less likely to occur. Hence, in the example, a glass having a uniform shape can be obtained. Thus, the glass can be easily processed, which increases the productivity.

In addition, the glass can be molded in the air atmosphere, which eliminates the need for complicated processes. Therefore, the productivity can be effectively increased.

Hereinafter, a preferred structure in this embodiment or the like will be described.

In this embodiment, the shape of the glass formed by the mold 13 is a disc-like shape. That is, the shape of the internal space of the mold 13 is a disc-like shape. Like this, the shape of the internal space of the mold 13 is preferably a plate-like shape. Thus, the melt 11 can be efficiently cooled. In addition, thus, a plate-like preform glass can be obtained. However, in the case where, without producing a preform glass, an optical element, such as a lens, is produced directly from the glass 18, the shape of the internal space of the mold 13 is not limited to the disc-like shape and may be any shape corresponding to a desired optical element, such as a conical shape or a prism-like shape.

This embodiment is suitable for the production of a glass having a small thickness and a large diameter. Specifically, where the height of the mold 13 is represented by H and the maximum of dimensions of the mold 13 along the direction orthogonal to the height of the mold 13 is represented by A, the ratio H/A is preferably not less than 1/50 and not more than 1/2. In the case of the glass meeting these dimensions, the melt 11 can be more efficiently cooled and, therefore, the glass can be easily efficiently produced. More specifically, the ratio H/A is preferably not more than 1/2, more preferably not more than 1/3, even more preferably not more than 1/4, and particularly preferably not more than 1/5. On the other hand, from the viewpoint of suppressing breakage and warpage, the ratio H/A is preferably not less than 1/50, more preferably not less than 1/40, even more preferably not less than 1/30, and particularly preferably not less than 1/20. The dimensions H and A are inside dimensions of the mold 13.

The outline of the mold 13 and the shape of the internal space of the mold 13 in plan view are preferably circular. Thus, the melt 11 can be easily uniformly cooled. However, the outline of the mold 13 and the shape of the internal space of the mold 13 in plan view are not particularly limited and, for example, they may be square, rectangular or elliptical. The plan view herein refers to a direction of view from above in Fig. 3(a) or others.

It is preferred to perform the step of preheating the mold 13 prior to the step of pouring the melt 11 into the mold 13. Suppose that the temperature of the mold 13 in the step of preheating the mold 13 is represented by T_{M}°C and the temperature of the melt 11 in the step of pouring the melt 11 into the mold 13 is represented by T_{L}°C. In the step of preheating the mold 13, an inequality T_{L}-120°C ≤ T_{M} ≤ T_{L}-20°C preferably holds, an inequality T_{L}-100°C ≤ T_{M} ≤ T_{L}-25°C more preferably holds, an inequality TL-100°C ≤ T_{M} ≤ T_{L}-30°C even more preferably holds, and an inequality T_{L}-100°C ≤ T_{M} ≤ T_{L}-35°C particularly preferably holds. Thus, the solidification of the melt 11 midway through the step of pouring the melt 11 into the mold 13 can be more certainly suppressed. Hence, contact between the solidified portion of the melt 11 and the melt 11 supplied can be more certainly prevented.

If the solidified portion of the melt 11 comes into contact with the supplied melt 11, the solidified portion is liable to be partially melted by a high-temperature melt 11. Furthermore, if a liquid obtained by partial melting of the solidified portion is mixed with the supplied melt 11, the melt 11 is likely to be inhomogeneous. In this case, striae are likely to occur in the glass 18. When, to cope with this, the mold 13 is preheated within the above temperature range, the solidification of the melt 11 midway through the step of pouring the melt 11 into the mold 13 can be more certainly suppressed. Therefore, the occurrence of striae in the glass 18 can be more certainly prevented.

Furthermore, when the mold 13 is preheated within the above temperature range to keep the mold 13 from reaching an excessively high temperature, soldering of the glass 18 to the mold 13 can be made less likely. In addition, since the melt 11 is prevented from being excessively heated, the melt 11 can be rapidly cooled down to a low temperature in the step of cooling the melt 11. Therefore, devitrification of the glass 18 can be more certainly suppressed.

In the step of pouring the melt 11 into the mold 13, it is preferred to start the pouring in a state where the bottom portion 14 of the mold 13 is brought close to the tubing 4 and then pour the melt 11 into the mold 13 while moving the mold 13 away from the tubing 4. Thus, the air is less likely to be dragged into the melt 11. Therefore, the melt 11 is less likely to be oxidized. Furthermore, the distance between the head of the tubing 14 and the surface of the melt 11 is preferably kept short. Specifically, the distance between the head of the tubing 14 and the surface of the melt 11 is preferably within 10 cm, more preferably within 8 cm, even more preferably within 5 cm, and particularly preferably within 3 cm. Thus, it can be effectively prevented that the supplied melt 11 comes into excessive contact with the outside air and is thus oxidized.

Where the specified thickness of the melt 11 is represented by Hm, the ratio Hm/H, which is the ratio of Hm to the thickness of the melt 11 reaching the top end of the wall portion 15 (i.e., the height H of the mold 13), is preferably not less than 0.6, more preferably not less than 0.7, even more preferably not less than 0.8, and particularly preferably not less than 0.9. A chalcogenide glass produced in the present invention is likely to have a low viscosity. Therefore, as the thickness of the melt 11 comes closer to the top end of the wall portion 15, the melt 11 is more likely to overflow the mold 13. In view of this, the ratio Hm/H is preferably not more than 1, more preferably not more than 0.99, and particularly preferably not more than 0.98.

As shown in Fig. 3(d), in this embodiment, water cooling is performed by spraying water from the nozzle 17 to the bottom surface 14a of the mold 13. Alternatively, water cooling may be performed by immersing the bottom surface 14a in water. The cooling of the melt 11 is not limited to water cooling of the mold 13. For example, the cooling may be performed by air cooling or other types of cooling from the direction of the bottom surface 14a. The cooling of the melt 11 is sufficient to be performed from the direction of the bottom surface 14a of the mold 13. However, not only the bottom surface 14a but also a portion of the side surface 15a may be cooled. More specifically, for example, in spraying water to the bottom surface 14a or immersing the bottom surface 14a in water, the water may come into contact with the side surface 15a. In performing air cooling from the direction of the bottom surface 14a, a portion or whole of the side surface 15a may be cooled together with the bottom surface 14a.

However, in the step of cooling the melt 11, only the bottom surface 14a of the mold 13 is preferably cooled. Thus, the solidification of the melt 11 more certainly progresses from the bottom portion 14 side toward the top side. Hence, the glass 18 can be more certainly molded into a uniform shape. A portion of the bottom surface 14a may be cooled. However, from the viewpoint of achieving uniform cooling, the whole of the bottom surface 14a is preferably cooled.

The rate of cooling of the mold 13 is preferably not lower than 5°C/min and not higher than 100°C/min. The higher the rate of cooling of the mold 13, the more rapidly the melt 11 is cooled. Therefore, when the rate of cooling is within the above range, the solidification of the melt 11 rapidly progresses, which makes it even less likely that precipitation of crystals or the like occurs and makes it even less likely that the glass 18 devitrifies. More specifically, the rate of cooling of the mold 13 is preferably not lower than 5°/min, more preferably not lower than 10°C/min, even more preferably not lower than 12°C/min, and particularly preferably not lower than 15°C/min. On the other hand, if the rate of cooling is too high, the glass is susceptible to breakage. Therefore, the rate of cooling of the mold 13 is preferably not higher than 100°C/min, more preferably not higher than 90°C/min, even more preferably not higher than 80°C/min, still even more preferably not higher than 50°C/min, and particularly preferably not higher than 30°C/min. The rate of cooling may have a specific temperature gradient or two or more levels of temperature gradients.

For example, when the internal space of the mold 13 has a disc-like shape, the diameter of the bottom surface is 40 mm to 60 mm, and the height is 10 mm to 20 mm, the rate of cooling of the melt 11 is preferably not lower than 5°C/min and not higher than 50°C/min, and more preferably not lower than 5°C/min and not higher than 30°C/min. As the rate of cooling of the melt 11 is higher, precipitation of crystals or the like is even less likely to occur and the glass 18 is even less likely to devitrify. In addition, the glass 18 is less likely to be broken. In this case, the ratio H/A is preferably not less than 1/6 and more preferably not less than 1/4. Furthermore, the ratio H/A is preferably not more than 1/2 and more preferably not more than 1/3.

For the raw material 6 in this embodiment, the ratio among component materials contained in the raw material 6 is adjusted to provide a glass 18 having the following composition. In the description of the composition of the glass 18, "%" refers to "% by mole". For example, the total of contents of A, B, and C may be described as "the content of A+B+C" or "A+B+C".

The glass 18 formed by the method according to this embodiment contains, as a glass composition in terms of % by mole, over 0% to 50% Ge, over 0% to 50% Ga, 30% to 90% Te, over 0% to 40% Ag+Al+Ti+Cu+In+Sn+Bi+Cr+Zn+Mn, and 0% to 50% F+Cl+Br+I.

Ge is a component for forming the glass network. Furthermore, Ge is a semimetallic element. The content of Ge is over 0% to 50%, preferably 2% to 40%, more preferably 4% to 35%, even more preferably 5% to 30%, still even more preferably 7% to 25%, and yet still even more preferably 10% to 20%. If the content of Ge is too small, vitrification becomes difficult. On the other hand, if the content of Ge is too large, Ge-based crystals are likely to precipitate and the raw material cost tends to rise.

Ga is a component for increasing the thermal stability of the glass (the stability of vitrification). Furthermore, Ga is a metallic element. The content of Ga is over 0% to 50%, preferably 1% to 45%, more preferably 2% to 40%, even more preferably 4% to 30%, still even more preferably 5% to 25%, and yet still even more preferably 10% to 20%. If the content of Ga is too small, vitrification becomes difficult. On the other hand, if the content of Ga is too large, Ga-based crystals are likely to precipitate and the raw material cost tends to rise.

Te, which is a chalcogen element, is an essential component that forms the glass network. Furthermore, Te is a semimetallic element. The content of Te is 30% to 90%, more preferably 40% to 89%, even more preferably 50% to 88%, still even more preferably 60% to 86%, and yet still even more preferably 70% to 85%. If the content of Te is too small, vitrification becomes difficult. On the other hand, if the content of Te is too large, Te-based crystals are likely to precipitate.

Ag+Al+Ti+Cu+In+Sn+Bi+Cr+Zn+Mn are metallic elements. When the glass contains these metallic elements, the thermal stability can be increased. The content of Ag+Al+Ti+Cu+In+Sn+Bi+Cr+Zn+Mn is 0% to 40%, preferably over 0% to 30%, more preferably over 0% to 20%, and even more preferably 0.1% to 10%. The content of Ag+Al+Ti+Cu+In+Sn+Bi+Cr+Zn+Mn is too small or too large, vitrification becomes difficult. The content of each component of Ag+Al+Ti+Cu+In+Sn+Bi+Cr+Zn+Mn is 0% to 40%, preferably 0% to 30% (over 0% at least one of them), more preferably 0% to 20% (over 0% at least one of them), and even more preferably 0.1% to 10%. Among them, Ag and/or Sn is preferably used because their effect of increasing the thermal stability of the glass is particularly large.

The glass formed in this embodiment may contain, in addition to the above components, for example, the following components.

F, Cl, Br, and I are also components that increase the thermal stability of the glass. The content of F, Cl, Br, and I is 0% to 50%, preferably 1% to 40%, more preferably 1% to 30%, even more preferably 1% to 25%, and particularly preferably 1% to 20%. If the content of F+Cl+Br+I is too large, vitrification becomes difficult and the weather resistance is likely to decrease. The content of each component of F, Cl, Br, and I is 0% to 50%, preferably 1% to 40%, more preferably 1% to 30%, even more preferably 1% to 25%, and particularly preferably 1% to 20%. Among them, I is preferably used because its elemental material is usable and its effect of increasing the thermal stability of the glass is particularly large.

When the glass contains Si, Sb or Cs, the thermal stability can be increased. Si and Sb are semimetals. Si+Sb+Cs is preferably 0% to 40%, more preferably 0% to 30%, even more preferably 0% to 20%, still even more preferably 0.1% to 10%, and particularly preferably 0.1% to 9%. The content of each component of Si, Sb, and Cs is preferably 0% to 40%, more preferably 0% to 30%, even more preferably 0% to 20%, still even more preferably 0.1% to 10%, and particularly preferably 0.1% to 9%.

S is a component that widens the vitrification range and easily increases the thermal stability of the glass. The content of S is preferably 0% to 30%, more preferably 0% to 20%, even more preferably 0% to 10%, and particularly preferably 0% to 3%. If the content of S is too large, the transparency of infrared rays with a wavelength of 10 µm or more is likely to decrease.

Se and As are components that widen the vitrification range and increase the thermal stability of the glass. The content of each of them is preferably 0% to 10% and more preferably 0.5% to 5%. However, these substances are toxic and, therefore, from the viewpoint of reducing the influences on environment and human bodies, the glass is preferably substantially free of these substances as described previously.

The glass is preferably substantially free of Cd, Tl, and Pb which are toxic substances. Herein, "substantially free of" means that the content is not more than 0.1%.

The proportion of metal in the raw material 6 is, in terms of % by volume, preferably 80% or more, more preferably 85% or more, and particularly preferably 90% or more. Thus, the raw material 6 can be easily melted by induction heating. Hence, temperature increase or temperature decrease can be more easily and rapidly achieved than by radiant heating and, thus, the productivity can be increased. The upper limit of the proportion of metal is not particularly limited, but may be, for example, not more than 100%, not more than 99% or particularly not more than 98%.

### [Reference Signs List]

- 1: container
- 2: bottom
- 3: sidewall portion
- 4: tubing
- 5: mantle tube
- 6: raw material
- 7: lid
- 8: gas supply tube
- 9: gas exhaust tube
- 10A: coil
- 10B: coil
- 11: melt
- 12: plug
- 13: mold
- 14: bottom portion
- 14a: bottom surface
- 15: wall portion
- 15a: side surface
- 16: hot plate
- 17: nozzle
- 18: glass
- D: depression
- O: cavity

## Claims

1. A glass production method comprising the steps of:
pouring a melt obtained by melting a raw material of a glass into a mold; and
cooling the melt to obtain the glass,
wherein the mold has a bottom surface and a side surface, and
in the step of cooling the melt, the mold is cooled from a direction of the bottom surface.

2. The glass production method according to claim 1,
further comprising the step of preheating the mold prior to the step of pouring the melt into the mold,
wherein, in the step of preheating the mold, T_{L}-120°C ≤ T_{M} ≤ T_{L}-20°C holds where T_{M}°C represents a temperature of the mold in the step of preheating the mold and T_{L}°C represents a temperature of the melt in the step of pouring the melt into the mold.

3. The glass production method according to claim 1 or 2, wherein, in the step of cooling the melt, only the bottom surface of the mold is cooled.

4. The glass production method according to claim 1 or 2, wherein where H represents a height of the mold and A represents a maximum of dimensions of the mold along a direction orthogonal to the height of the mold, H/A is not less than 1/50 and not more than 1/2.

5. The glass production method according to claim 1 or 2, wherein the glass is a chalcogenide glass.
